# EUROPÄISCHE PATENTSCHRIFT

(11) **EP 1 844 645 B1**
(45) Veröffentlichungstag und Bekanntmachung des Hinweises auf die Patenterteilung: **03.03.2010**
(21) Anmeldenummer: 07105789.7
(22) Anmeldetag: 05.04.2007
(51) Int. Cl.: A01F 12/40

(54) **Rotor für einen Strohhäcksler mit Messern und Luftschaufelelementen**
Rotor for a straw chopper with knives and fanning elements
Rotor pour hache-paille aux couteaux et pelles d'air

(30) Priorität: 15.04.2006 DE 102006017789
(43) Veröffentlichungstag der Anmeldung: 17.10.2007
(73) Patentinhaber: Deere & Company, Moline, IL 61265-8098 (US)
(72) Erfinder: Priesnitz, Rico, 66822, Lebach (DE)
(74) Vertreter: Holst, Sönke

(56) Entgegenhaltungen:
- EP-A- 1 757 183
- DE-A1- 3 925 701
- DE-A1-102004 048 115
- DE-A1-102004 049 965

## Beschreibung

### Beschreibung für folgende(n) Vertragsstaat(en) : BE, DE, SE

Die Erfindung betrifft einen Rotor für einen Strohhäcksler, mit einem Rotorkörper, einer Mehrzahl um den Umfang und in axialer Richtung um den Rotorkörper verteilten, daran befestigten Konsolen, einer Anzahl an Messern, die an Konsolen pendelnd gelagert sind, sowie mit einer Anzahl an Luftschaufelelementen, die einen U-förmigen Querschnitt aufweisen und mit ihrem mittleren Schenkel an Konsolen befestigt und in radialer Richtung kürzer als die Messer sind.

### Stand der Technik

Mähdrescher werden zur Ernte von Korn enthaltenden Pflanzen verwendet. Die Pflanzen werden durch einen geeigneten Emtevorsatz, insbesondere ein Schneidwerk oder einen Maispflücker, vom Feld aufgenommen und mittels eines Schrägförderers in das Innere des Mähdreschers gefördert. Dort werden sie gedroschen und in einer Trenneinrichtung wird das im ausgedroschenen Erntegut verbliebene Korn abgetrennt. Das beim Dreschen und Trennen gewonnene Korn wird in einer Reinigungseinrichtung von Verunreinigungen befreit und in einem Korntank gespeichert, aus dem es durch einen Entladeschneckenförderer auf ein Transportfahrzeug überladen werden kann. Ein im Wesentlichen aus Stroh bestehender Emtegutrestestrom wird an der Rückseite des Mähdreschers ausgestoßen und ungehäckselt als Schwad oder gehäckselt in Breitverteilung auf dem Feld abgelegt.

Das Häckseln des Strohs erfolgt in der Regel durch einen Strohhäcksler, der mit einem Gehäuse und einem darin drehbar angeordneten, pendelnd gelagerte Messer tragenden Rotor ausgestattet ist. Die Drehachse des Rotors erstreckt sich horizontal und quer zur Fahrtrichtung. Die Messer des Rotors wirken mit feststehenden, am Gehäuse befestigten Gegenmessem zusammen. Das gehäckselte Stroh wird nach hinten in ein mit Leitblechen besetztes Verteilergehäuse ausgestoßen. Die sich vertikal und in Fahrtrichtung erstreckenden Leitbleche sind - in unterschiedlichem, von ihrer seitlichen Position innerhalb des Verteilergehäuses abhängigen Maße - seitlich nach außen gekrümmt oder gewölbt, um das Stroh in seitlicher Richtung abzulenken, so dass es gleichmäßig über die Schnittbreite des Mähdreschers über dem Feld verteilt wird.

Die Messer des Rotors sind in der Regel flach und erstrecken sich in der Drehrichtung des Rotors. Um den Luftfluss durch den Strohhäcksler zu verstärken und dadurch die Wurfweite der Emtegutreste zu vergrößern, wurde vorgeschlagen, Messer mit zusätzlichen Paddeln auszustatten, die rechtwinklig zum Messer angeordnet sind. In der US 5 482 508 A wird ein Strohhäcksler beschrieben, bei dem die Paddel im radial äußeren Bereich der Messer und dort an ihrer nachlaufenden Kante angebracht sind. Die mit Paddeln ausgestatteten Messer werden anstelle einiger flacher Messer eingesetzt und vornehmlich an den Außenseiten des Strohhäckslers angebracht, da wegen der dort zu erzielenden Wurfweite, die größer als in der Mitte des Strohhäckslers ist, ein größerer Bedarf an Luftfördervolumen vorliegt.

Die EP 1 491 084 A schlägt einen Strohhäcksler mit Messern mit zusätzlichen Paddeln vor, die am radial inneren, dem Rotor zugewandten Bereich des Messers angebracht sind. Ein erstes Paddel ist an der vorlaufenden Kante des Messers angebracht. Zusätzlich kann auch ein zweites Paddel an der nachlaufenden Kante des Messers angebracht werden. In einer Ausführungsform sind die Paddelmesser abwechselnd mit flachen Messern um den Umfang des Rotors verteilt.

Die als gattungsbildend angesehene DE 10 2004 048 115 A und die nachveröffentlichte DE 10 2004 049 965 A beschreiben Strohhäcksler mit flachen Messern, bei denen Luftschaufelelemente mit U-förmigem Querschnitt mit ihrem mittleren Schenkel an den Befestigungskonsolen der Messer am Rotor angebracht und mit den Schrauben, die auch die flachen Messer am Rotor fixieren, gehalten werden. Gemäß der ersten genannten Schrift sind die Luftschaufelelemente starr am Rotor angebracht, während sie gemäß der zweiten Schrift frei pendelnd aufgehängt sind.

Beim beschriebenen Stand der Technik sind alle Befestigungskonsolen des Rotors entweder mit flachen Messern oder Paddelmessem versehen. Die Paddelmesser haben den Nachteil relativ hoher Herstellungskosten und erfordern im Verschleißfall auch den Austausch der nur in relativ geringem Maße dem Verschleiß unterliegenden Paddel. Die gleichzeitige Anbringung von Luftschaufelelementen und flachen Messern an den Befestigungskonsolen des Rotors erweist sich als relativ umständlich und aerodynamisch nicht vorteilhaft, da die pendelnden Messer sich durch Wirbelbildung nachteilig auf die Luftförderwirkung des Luftschaufelelements auswirken, mit dem sie gemeinsam an der Konsole befestigt sind.

In der nachveröffentlichten EP 1 757 183 A wird ein Strohhäcksler mit einem Rotor und an mit dem Rotor verbundenen Konsolen pendelnd aufgehängten Messern beschrieben, bei dem zusätzliche Luftschaufeln getrennt von den Messern an separaten Konsolen befestigt sein können. Die Luftschaufeln sollen einen radialen Luftstrom erzeugen und umfassen daher einen dem Rotor benachbarten, sich in Drehrichtung erstreckenden Abschnitt und einen um etwa 45° entgegen der Drehrichtung abgewinkelten, äußeren Abschnitt.

### Aufgabe der Erfindung

Das der Erfindung zu Grunde liegende Problem wird darin gesehen, einen Rotor für einen Strohhäcksler bereitzustellen, der mit einfachen Mitteln eine hohe Häckselqualität und gute Breitenverteilung des Häckselgutes ermöglicht.

Dieses Problem wird erfindungsgemäß durch die Lehre des Patentanspruchs 1 gelöst, wobei in den weiteren Patentansprüchen Merkmale aufgeführt sind, die die Lösung in vorteilhafter Weise weitereniwickeln.

Die Erfindung bezieht sich auf einen Rotor für einen Strohhäcksler eines Mähdreschers. Der Rotor umfasst einen Rotorkörper und eine Mehrzahl von Konsolen die zur Aufnahme von pendelnd an den Konsolen gelagerten Messern dienen. Weiterhin ist eine Anzahl an Luftschaufelelementen vorhanden, die einen U-förmigen Querschnitt aufweisen und mit ihrem mittleren Schenkel ebenfalls an Konsolen befestigt und kürzer als die Messer sind und insbesondere nicht in den Zwischenraum zwischen benachbarten Gegenmessern eintauchen, mit denen die Messer zusammenwirken. Es wird vorgeschlagen, dass einige der Konsolen nur ein oder mehrere (zwei, drei, etc.) Luftschaufelelement(e), aber kein Messer haltern. Es wird somit vermieden, dass diese Konsolen sowohl Messer als auch Luftschaufelelemente halten. Analog können andere Konsolen nur ein oder mehrere Messer, aber kein Luftschaufelelement halten.

Auf diese Weise spart man an den nur ein oder mehrere Luftschaufelelement(e) tragenden Konsolen eine Anzahl an Messern ein, was die Herstellungskosten des Rotors vermindert. Außerdem erreicht man durch die messerlosen, frei stehenden Luftschaufelelemente eine Verbesserung der aerodynamischen Eigenschaften des Rotors, die zu einer ausgezeichneten Strömungsgeschwindigkeit und Breitenverteilung führt. Der Rotor kann ohne großen Aufwand in einen an sich bekannten Rotor ohne Luftschaufelelemente oder mit Luftschaufelelementen umgebaut werden, die gemeinsam mit Messern an einer Konsole angebracht sind. Auch kann die Anzahl der Luftschaufelelemente und Messer an die jeweiligen Emtebedingungen angepasst werden.

Betrachtet man die Umfangsrichtung des Rotors, folgen vorzugsweise Konsolen mit Messern auf Konsolen nur mit Luftschaufelelementen. Dabei können jeweils mehrere Messer (z. B. zwei oder drei) in Umfangsrichtung aufeinander folgen, bis wieder ein Luftschaufelelement (oder mehrere Luftschaufelelemente) folgt, oder es folgt jeweils ein Luftschaufelelement auf ein Messer. Analog können jeweils mehrere Luftschaufelelemente (z. B. zwei oder drei) in Umfangsrichtung aufeinander folgen, bis wieder ein Messer folgt.

Die Luftschaufelelemente können starr oder pendelnd am Rotor befestigt sein. In einer bevorzugten Ausführungsform werden starre Luftschaufelelemente in Umfangsrichtung des Rotors in alternierender Reihenfolge mit Messern angebracht, während pendelnde Luftschaufelelemente alternierend mit drei aufeinander folgenden Messern angebracht werden. Es ist aber auch eine umgekehrte Anordnung möglich, d. h. pendelnde Luftschaufelelemente in Umfangsrichtung des Rotors in alternierender Reihenfolge mit Messern oder starre Luftschaufelelemente alternierend mit drei aufeinander folgenden Messern.

### Ausführungsbeispiele

In den Zeichnungen werden nachfolgend zwei näher beschriebene Ausführungsbeispiele der Erfindung dargestellt. Es zeigt:
- Fig. 1: einen Mähdrescher mit einem Strohhäcksler;
- Fig. 2: eine perspektivische Ansicht einer ersten Ausführungsform des Rotors des Strohhäckslers mit Luftschaufelelementen,
- Fig. 3: eine perspektivische Explosionszeichnung der Befestigung der Luftschaufelelemente an einer Konsole des Rotors aus Figur 2,
- Fig. 4: eine perspektivische Ansicht einer zweiten Ausführungsform des Rotors des Strohhäckslers mit Luftschaufelelementen,

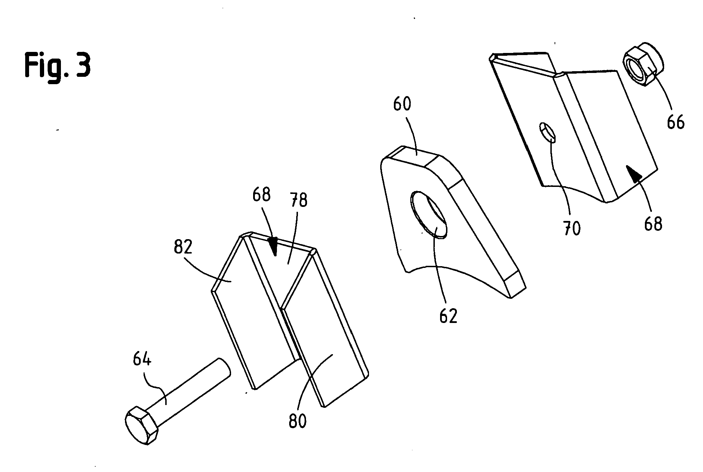

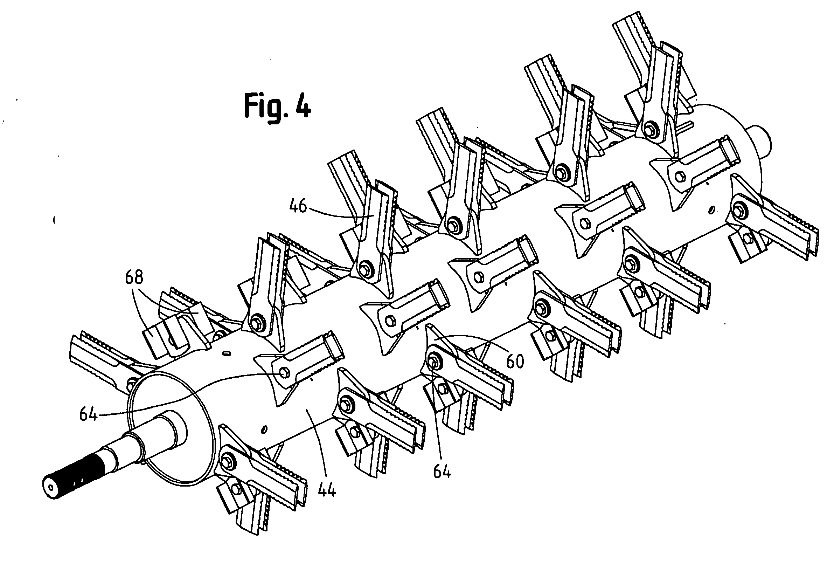

- Fig. 3: eine perspektivische Explosionszeichnung der Befestigung der Luftschaufelelemente an einer Konsole des Rotors aus Figur 4.

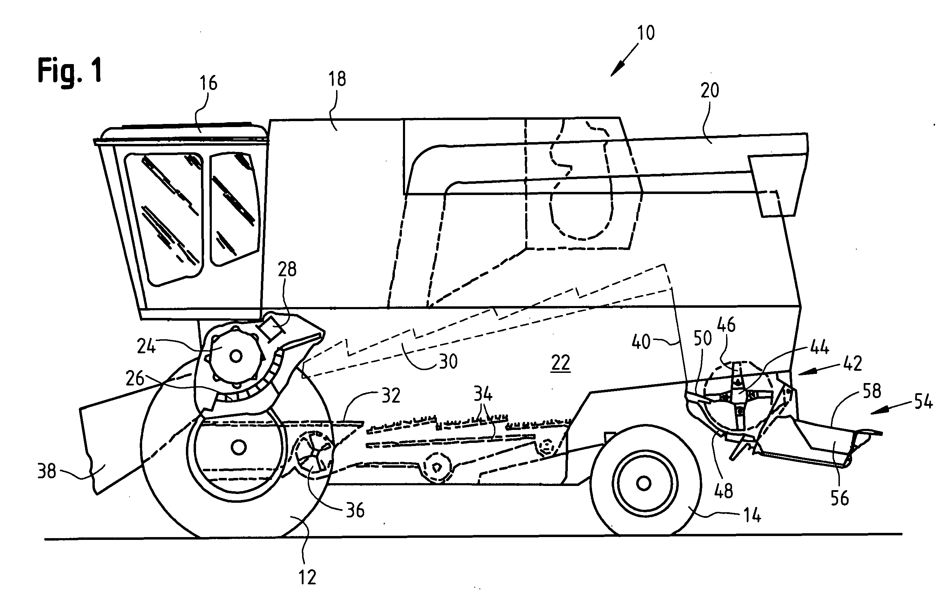

Eine in der Figur 1 gezeigte Erntemaschine in der Form eines Mähdreschers 10 ist auf vorderen angetriebenen und rückwärtigen lenkbaren Rädern 12 bzw. 14 getragen und weist eine Fahrerkabine 16 auf, von der aus sie von einem Fahrer bedient werden kann. An die Fahrerkabine 16 schließt sich rückwärtig ein Korntank 18 an, der in ihn abgegebenes Gut über ein Entleerrohr 20 nach außen abgeben kann. Der Korntank 18 lagert auf einem Rahmen 22, in dem zugeführtes Gut auf dem Weg über eine Dreschtrommel 24, einen Dreschkorb 26 und eine Wendetrommel 28 in seine großen und kleinen Bestandteile zerlegt wird. Auf daran anschließenden Schüttlem 30, sowie auf einem Vorbereitungsboden 32 und Sieben 34 wird eine weitere Trennung des geernteten Guts durchgeführt, wobei schließlich der ausgedroschene Gutanteil in den Korntank 18 gefördert wird, die großen Erntegutteile über die Schüttler 30 über ein Strohleitblech 40 einem Strohhäcksler 42 zugeführt werden und leichte Bestandteile mittels eines Gebläses 36 von den Sieben 34 ebenfalls auf den Boden oder in den Einlass des Strohhäckslers 42 geblasen oder durch einen separaten Förderer dorthin verbracht werden. Auf dem Boden liegendes oder stehendes Gut wird über einen Schrägförderer 38 und eine Steinfangmulde der Dreschtrommel 24 zugeführt, nachdem es von einer nicht gezeigten Erntegutbergungsvorrichtung vom Boden aufgenommen worden ist.

Der Strohhäcksler 42 setzt sich aus einem Gehäuse 48 und einem darin angeordneten Rotor zusammen, der einen hohlzylindrischen Rotorkörper 44 und um seinen Umfang und über seine Länge verteilte, pendelnd aufgehängte, flache Messer 46 umfasst. Der Rotorkörper 44 ist mit einem Antrieb derart verbunden, dass er in dem Gehäuse 48 um eine etwa horizontale, quer zur Fahrtrichtung verlaufende Achse rotiert. Im Zusammenwirken mit Gegenmessem 50 werden die ausgedroschenen, großen Erntegutteile zu Häckselgut zerkleinert. An der Rückseite des Strohhäckslers 42 ist eine Verteileinrichtung 54 angeordnet, die eine Anzahl seitlich nebeneinander angeordneter Strohleitbleche 56 umfasst, welche unterhalb einer Strohverteilerhaube 58 angeordnet sind.

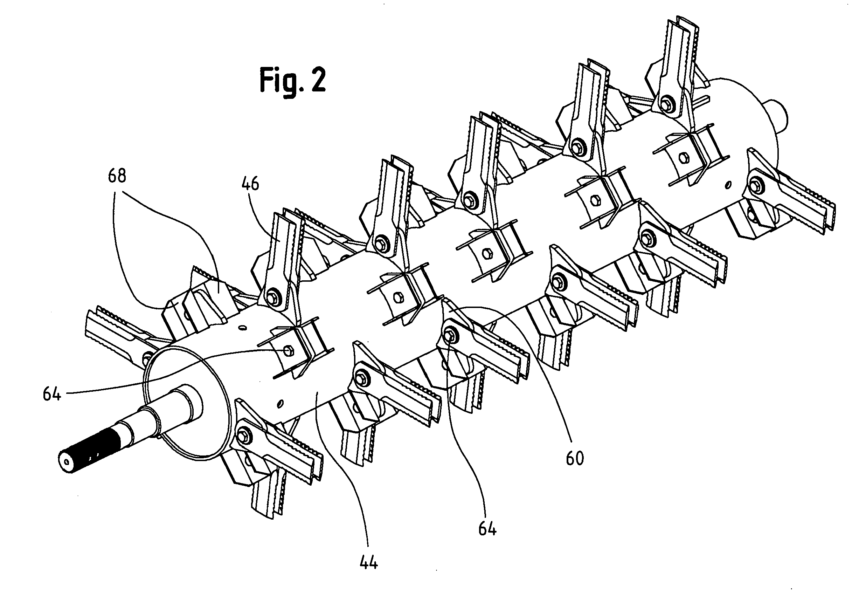

Die Figur 2 zeigt den Rotor mit dem Rotorkörper 44 und den daran angebrachten Messern 46 in perspektivischer Darstellung. Auf den Rotorkörper 44 sind acht (sich jeweils in Achsrichtung des Rotorkörpers 44 erstreckende) Reihen an Konsolen 60 aufgeschweißt, die mit sich in Achsrichtung des Rotorkörpers 44 erstreckenden Bohrungen 62 versehen sind (s. Figur 3). Durch jede der Bohrungen 62 erstreckt sich jeweils ein Befestigungselement 64 in Form einer Schraube, die durch eine Mutter 66 gesichert ist.

Das Befestigungselement 64 dient bei den Konsolen 60 jeder zweiten Reihe zur Befestigung von Luftschaufelelementen 68 auf beiden Seiten der Konsolen 60, indem es sich durch entsprechende Löcher 70 in den Luftschaufelelementen 68 erstreckt.

Die Luftschaufelelemente 68 weisen einen U-förmigen Querschnitt auf und haben somit drei Schenkel 78, 80, 82. Das Loch 70 befindet sich im mittleren Schenkel 78, so dass die anderen Schenkel 80, 82 sich in Achsrichtung des Rotorkörpers 44 erstrecken. Die Außenkanten der anderen Schenkel 80, 82 sind vom mittleren Schenkel 78 ausgehend zum äußeren Ende hin geringfügig abgeschrägt. Die am Rotorkörper 44 anliegende Fläche des mittleren Schenkels 78 der Luftschaufelelemente 68 ist abgerundet, so dass sich nur ein geringer oder kein Spalt zwischen den Luftschaufelelementen 68 und dem Rotorkörper 44 ergibt. Auf diese Weise erreicht man, dass die Luftschaufelelemente 68 starr - und somit nicht pendelnd - am Rotorkörper 44 befestigt sind. Die Luftschaufelelemente 68 auf beiden Seiten der Konsole 60 sind zur Längsachse des Rotorkörpers 44 symmetrisch und untereinander identisch, so dass nur ein Typ an Luftschaufelelementen 68 herzustellen ist und sie untereinander ausgetauscht werden können.

Die Länge der Luftschaufelelemente 68 ist geringer als die der Messer 46, so dass letztere, aber nicht die Luftschaufelelemente 68 zwischen den Gegenmessem 50 eintauchen können. Die Luftschaufelelemente 68 wirken daher auch nicht mit dem Häckselmaterial zusammen, sondern fördern nur Luft.

Die Befestigung der Luftschaufelelemente 68 erfolgt, wie in der Figur 3 dargestellt, durch Befestigungselemente 64 in Form einer Schraube, die sich jeweils durch ein Loch in einem Luftschaufelelement 68, die Bohrung 62 in der Konsole 60, ein Loch 70 in einem weiteren Luftschaufelelement 68 und schließlich die Mutter 66 erstreckt.

In Umfangsrichtung des Rotors folgt somit jeweils eine Konsole 60, die nur pendelnd daran gelagerte Messer 46 trägt, auf eine (axial etwas versetzte) Konsole 60, die nur starr daran befestigte Luftschaufelelemente 68 trägt und umgekehrt. In axialer Richtung folgen in der Figur 2 entweder Konsolen 60 mit Messern 46 oder Konsolen 60 mit Luftschaufelelementen 68 aufeinander, obwohl sich auch in dieser Richtung Konsolen 60 mit Messern 46 und Konsolen 60 mit Luftschaufelelementen 68 abwechseln könnten.

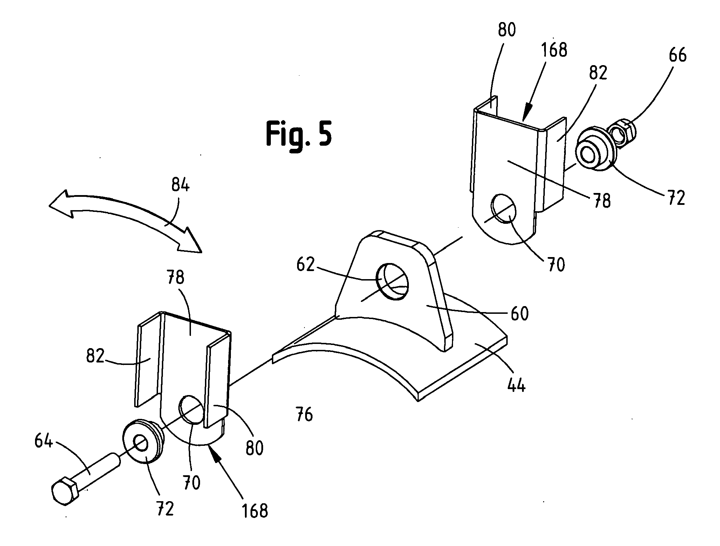

Die Figur 4 zeigt eine zweite Ausführungsform eines Rotors. Mit der ersten Ausführungsform übereinstimmende Elemente sind mit denselben Bezugszeichen gekennzeichnet. Es liegen zwei wesentliche Unterschiede zur ersten Ausführungsform vor:
a) Die Luftschaufelbleche 168 sind nicht starr, sondern pendelnd am Rotorkörper 44 gelagert (s. Figur 5).
b) Es folgen in Umfangsrichtung des Rotorkörpers 44 jeweils drei Messer 46 tragende Konsolen 60 auf eine Luftschaufelelemente 168 tragende Konsole 60.

In axialer Richtung folgen in der Figur 4 entweder Konsolen 60 mit Messern 46 oder Konsolen 60 mit Luftschaufelelementen 168 aufeinander, obwohl sich auch in dieser Richtung Konsolen 60 mit Messern 46 und Konsolen 60 mit Luftschaufelelementen 168 abwechseln könnten.

Die Befestigung der Luftschaufelelemente 168 erfolgt, wie in der Figur 5 dargestellt, durch Befestigungselemente 64 in Form einer Schraube, die sich jeweils durch eine erste Buchse 72, ein Loch 70 in einem Luftschaufelelement 168, die Bohrung 62 in der Konsole 60, ein Loch 70 in einem weiteren Luftschaufelelement 168, eine weitere erste Buchse 72, und schließlich die Mutter 66 erstreckt. Die Buchsen 72 erstrecken sich jeweils durch das Loch 70 im Luftschaufelelement 168, wobei ein hinreichendes Spiel zur pendelnden Lagerung des Luftschaufelelements 168 verbleibt. Die Buchsen 72 können sich in die Bohrung 62 hinein erstrecken, müssen es aber nicht.

Die Luftschaufelelemente 168 weisen einen U-förmigen Querschnitt auf und haben somit drei Schenkel 78, 80 und 82. Das Loch 70 befindet sich im mittleren Schenkel 78, so dass der zweite Schenkel 80 und der dritte Schenkel 82 sich jeweils in Achsrichtung des Rotorkörpers 44 erstrecken. Der erste Schenkel 78 ist länger als der zweite und dritte Schenkel 80, 82. Ihre in radialer Richtung des Rotorkörpers 44 betrachtet äußeren Enden liegen jedoch in einer Ebene. In Achsrichtung des Rotorkörpers 44 betrachtet entspricht die Länge der zweiten und dritten Schenkel 80, 82 etwa der Hälfte der in Drehrichtung gemessenen Breite der Messer 46. Die Schenkel 80, 82 erstrecken sich demnach nur über einen Teil des Abstands zwischen zwei in einer Reihe benachbarten Konsolen 60, was den Energiebedarf des Strohhäckslers 42 in Grenzen hält. Die Luftschaufelelemente 68, 168 können einteilig aus Metall hergestellt werden, indem sie zunächst ausgestanzt und dann die Schenkel 80, 82 umgebogen werden. Alternativ werden sie aus Kunststoff hergestellt, insbesondere im Spritzgussverfahren.

Der dem Rotorkörper 44 benachbarte Bereich des ersten Schenkels 78 ist konvex abgerundet, so dass sich das Luftschaufelelement 168 in Richtung des Pfeils 84 frei um das Befestigungselement 64 drehen kann. Die dargestellte Position nehmen die Luftschaufelelemente 168 beim Betrieb aufgrund der Fliehkraft ein. Die Luftschaufelelemente 168 auf beiden Seiten der Konsole 60 sind zur Längsachse des Rotorkörpers 44 symmetrisch und untereinander identisch, so dass nur ein Typ an Luftschaufelelementen 168 herzustellen ist und sie untereinander ausgetauscht werden können.

Die Länge der Luftschaufelelemente 168 ist geringer als die der Messer 46, so dass letztere, aber nicht die Luftschaufelelemente 168 zwischen den Gegenmessem 50 eintauchen können.

In beiden Ausführungsformen tragen die Konsolen 60 entweder Messer 46 oder Luftschaufelelemente 68 bzw. 168, aber nicht beide gemeinsam. Bei der Ausführungsform nach Figur 5 erhält man in der Regel eine kleinere Partikelgröße als bei der Ausführungsform nach Figur 3, die in vielen Fällen aber auch hinreichend ist und einen wesentlich kleineren Aufwand verlangt.

### Beschreibung für folgende(n) Vertragsstaat(en) : AT

Die Erfindung betrifft einen Rotor für einen Strohhäcksler, mit einem Rotorkörper, einer Mehrzahl um den Umfang und in axialer Richtung um den Rotorkörper verteilten, daran befestigten Konsolen, einer Anzahl an Messern, die an Konsolen pendelnd gelagert sind, sowie mit einer Anzahl an Luftschaufelelementen, die in radialer Richtung kürzer als die Messer und an Konsolen befestigt sind.

### Stand der Technik

Mähdrescher werden zur Ernte von Korn enthaltenden Pflanzen verwendet. Die Pflanzen werden durch einen geeigneten Emtevorsatz, insbesondere ein Schneidwerk oder einen Maispflücker, vom Feld aufgenommen und mittels eines Schrägförderers in das Innere des Mähdreschers gefördert. Dort werden sie gedroschen und in einer Trenneinrichtung wird das im ausgedroschenen Erntegut verbliebene Korn abgetrennt. Das beim Dreschen und Trennen gewonnene Korn wird in einer Reinigungseinrichtung von Verunreinigungen befreit und in einem Korntank gespeichert, aus dem es durch einen Entladeschneckenförderer auf ein Transportfahrzeug überladen werden kann. Ein im Wesentlichen aus Stroh bestehender Erntegutrestestrom wird an der Rückseite des Mähdreschers ausgestoßen und ungehäckselt als Schwad oder gehäckselt in Breitverteilung auf dem Feld abgelegt.

Das Häckseln des Strohs erfolgt in der Regel durch einen Strohhäcksler, der mit einem Gehäuse und einem darin drehbar angeordneten, pendelnd gelagerte Messer tragenden Rotor ausgestattet ist. Die Drehachse des Rotors erstreckt sich horizontal und quer zur Fahrtrichtung. Die Messer des Rotors wirken mit feststehenden, am Gehäuse befestigten Gegenmessern zusammen. Das gehäckselte Stroh wird nach hinten in ein mit Leitblechen besetztes Verteilergehäuse ausgestoßen. Die sich vertikal und in Fahrtrichtung erstreckenden Leitbleche sind - in unterschiedlichem, von ihrer seitlichen Position innerhalb des Verteilergehäuses abhängigen Maße - seitlich nach außen gekrümmt oder gewölbt, um das Stroh in seitlicher Richtung abzulenken, so dass es gleichmäßig über die Schnittbreite des Mähdreschers über dem Feld verteilt wird.

Die Messer des Rotors sind in der Regel flach und erstrecken sich in der Drehrichtung des Rotors. Um den Luftfluss durch den Strohhäcksler zu verstärken und dadurch die Wurfweite der Erntegutreste zu vergrößern, wurde vorgeschlagen, Messer mit zusätzlichen Paddeln auszustatten, die rechtwinklig zum Messer angeordnet sind. In der US 5 482 508 A wird ein Strohhäcksler beschrieben, bei dem die Paddel im radial äußeren Bereich der Messer und dort an ihrer nachlaufenden Kante angebracht sind. Die mit Paddeln ausgestatteten Messer werden anstelle einiger flacher Messer eingesetzt und vornehmlich an den Außenseiten des Strohhäckslers angebracht, da wegen der dort zu erzielenden Wurfweite, die größer als in der Mitte des Strohhäckslers ist, ein größerer Bedarf an Luftfördervolumen vorliegt.

Die EP 1 491 084 A schlägt einen Strohhäcksler mit Messern mit zusätzlichen Paddeln vor, die am radial inneren, dem Rotor zugewandten Bereich des Messers angebracht sind. Ein erstes Paddel ist an der vorlaufenden Kante des Messers angebracht. Zusätzlich kann auch ein zweites Paddel an der nachlaufenden Kante des Messers angebracht werden. In einer Ausführungsform sind die Paddelmesser abwechselnd mit flachen Messern um den Umfang des Rotors verteilt.

Die DE 10 2004 048 115 A und die nachveröffentlichte DE 10 2004 049 965 A beschreiben Strohhäcksler mit flachen Messern, bei denen Luftschaufelelemente mit U-förmigem Querschnitt mit ihrem mittleren Schenkel an den Befestigungskonsolen der Messer am Rotor angebracht und mit den Schrauben, die auch die flachen Messer am Rotor fixieren, gehalten werden. Gemäß der ersten genannten Schrift sind die Luftschaufelelemente starr am Rotor angebracht, während sie gemäß der zweiten Schrift frei pendelnd aufgehängt sind.

Beim beschriebenen Stand der Technik sind alle Befestigungskonsolen des Rotors entweder mit flachen Messern oder Paddelmessern versehen. Die Paddelmesser haben den Nachteil relativ hoher Herstellungskosten und erfordern im Verschleißfall auch den Austausch der nur in relativ geringem Maße dem Verschleiß unterliegenden Paddel. Die gleichzeitige Anbringung von Luftschaufelelementen und flachen Messern an den Befestigungskonsolen des Rotors erweist sich als relativ umständlich und aerodynamisch nicht vorteilhaft, da die pendelnden Messer sich durch Wirbelbildung nachteilig auf die Luftförderwirkung des Luftschaufelelements auswirken, mit dem sie gemeinsam an der Konsole befestigt sind.

### Aufgabe der Erfindung

Das der Erfindung zu Grunde liegende Problem wird darin gesehen, einen Rotor für einen Strohhäcksler bereitzustellen, der mit einfachen Mitteln eine hohe Häckselqualität und gute Breitenverteilung des Häckselgutes ermöglicht.

Dieses Problem wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Die Erfindung bezieht sich auf einen Rotor für einen Strohhäcksler eines Mähdreschers. Der Rotor umfasst einen Rotorkörper und eine Mehrzahl von Konsolen die zur Aufnahme von pendelnd an den Konsolen gelagerten Messern dienen. Weiterhin ist eine Anzahl an Luftschaufelelementen vorhanden, die ebenfalls an Konsolen befestigt und kürzer als die Messer sind und insbesondere nicht in den Zwischenraum zwischen benachbarten Gegenmessern eintauchen, mit denen die Messer zusammenwirken. Es wird vorgeschlagen, dass einige der Konsolen nur ein oder mehrere (zwei, drei, etc.) Luftschaufelelement(e), aber kein Messer haltern. Es wird somit vermieden, dass diese Konsolen sowohl Messer als auch Luftschaufelelemente halten. Analog können andere Konsolen nur ein oder mehrere Messer, aber kein Luftschaufelelement halten.

Auf diese Weise spart man an den nur ein oder mehrere Luftschaufelelement(e) tragenden Konsolen eine Anzahl an Messern ein, was die Herstellungskosten des Rotors vermindert. Außerdem erreicht man durch die messerlosen, frei stehenden Luftschaufelelemente eine Verbesserung der aerodynamischen Eigenschaften des Rotors, die zu einer ausgezeichneten Strömungsgeschwindigkeit und Breitenverteilung führt. Der Rotor kann ohne großen Aufwand in einen an sich bekannten Rotor ohne Luftschaufelelemente oder mit Luftschaufelelementen umgebaut werden, die gemeinsam mit Messern an einer Konsole angebracht sind. Auch kann die Anzahl der Luftschaufelelemente und Messer an die jeweiligen Erntebedingungen angepasst werden.

Betrachtet man die Umfangsrichtung des Rotors, folgen vorzugsweise Konsolen mit Messern auf Konsolen nur mit Luftschaufelelementen. Dabei können jeweils mehrere Messer (z. B. zwei oder drei) in Umfangsrichtung aufeinander folgen, bis wieder ein Luftschaufelelement (oder mehrere Luftschaufelelemente) folgt, oder es folgt jeweils ein Luftschaufelelement auf ein Messer. Analog können jeweils mehrere Luftschaufelelemente (z. B. zwei oder drei) in Umfangsrichtung aufeinander folgen, bis wieder ein Messer folgt.

Die Luftschaufelelemente können starr oder pendelnd am Rotor befestigt sein. In einer bevorzugten Ausführungsform werden starre Luftschaufelelemente in Umfangsrichtung des Rotors in alternierender Reihenfolge mit Messern angebracht, während pendelnde Luftschaufelelemente alternierend mit drei aufeinander folgenden Messern angebracht werden. Es ist aber auch eine umgekehrte Anordnung möglich, d. h. pendelnde Luftschaufelelemente in Umfangsrichtung des Rotors in alternierender Reihenfolge mit Messern oder starre Luftschaufelelemente alternierend mit drei aufeinander folgenden Messern.

### Ausführungsbeispiele

In den Zeichnungen werden nachfolgend zwei näher beschriebene Ausführungsbeispiele der Erfindung dargestellt. Es zeigt:
- Fig. 1: einen Mähdrescher mit einem Strohhäcksler;
- Fig. 2: eine perspektivische Ansicht einer ersten Ausführungsform des Rotors des Strohhäckslers mit Luftschaufelelementen,
- Fig. 3: eine perspektivische Explosionszeichnung der Befestigung der Luftschaufelelemente an einer Konsole des Rotors aus Figur 2,
- Fig. 4: eine perspektivische Ansicht einer zweiten Ausführungsform des Rotors des Strohhäckslers mit Luftschaufelelementen,
- Fig. 3: eine perspektivische Explosionszeichnung der Befestigung der Luftschaufelelemente an einer Konsole des Rotors aus Figur 4.

Eine in der Figur 1 gezeigte Erntemaschine in der Form eines Mähdreschers 10 ist auf vorderen angetriebenen und rückwärtigen lenkbaren Rädern 12 bzw. 14 getragen und weist eine Fahrerkabine 16 auf, von der aus sie von einem Fahrer bedient werden kann. An die Fahrerkabine 16 schließt sich rückwärtig ein Korntank 18 an, der in ihn abgegebenes Gut über ein Entleerrohr 20 nach außen abgeben kann. Der Korntank 18 lagert auf einem Rahmen 22, in dem zugeführtes Gut auf dem Weg über eine Dreschtrommel 24, einen Dreschkorb 26 und eine Wendetrommel 28 in seine großen und kleinen Bestandteile zerlegt wird. Auf daran anschließenden Schüttlern 30, sowie auf einem Vorbereitungsboden 32 und Sieben 34 wird eine weitere Trennung des geernteten Guts durchgeführt, wobei schließlich der ausgedroschene Gutanteil in den Korntank 18 gefördert wird, die großen Erntegutteile über die Schüttler 30 über ein Strohleitblech 40 einem Strohhäcksler 42 zugeführt werden und leichte Bestandteile mittels eines Gebläses 36 von den Sieben 34 ebenfalls auf den Boden oder in den Einlass des Strohhäckslers 42 geblasen oder durch einen separaten Förderer dorthin verbracht werden. Auf dem Boden liegendes oder stehendes Gut wird über einen Schrägförderer 38 und eine Steinfangmulde der Dreschtrommel 24 zugeführt, nachdem es von einer nicht gezeigten Erntegutbergungsvorrichtung vom Boden aufgenommen worden ist.

Der Strohhäcksler 42 setzt sich aus einem Gehäuse 48 und einem darin angeordneten Rotor zusammen, der einen hohlzylindrischen Rotorkörper 44 und um seinen Umfang und über seine Länge verteilte, pendelnd aufgehängte, flache Messer 46 umfasst. Der Rotorkörper 44 ist mit einem Antrieb derart verbunden, dass er in dem Gehäuse 48 um eine etwa horizontale, quer zur Fahrtrichtung verlaufende Achse rotiert. Im Zusammenwirken mit Gegenmessern 50 werden die ausgedroschenen, großen Erntegutteile zu Häckselgut zerkleinert. An der Rückseite des Strohhäckslers 42 ist eine Verteileinrichtung 54 angeordnet, die eine Anzahl seitlich nebeneinander angeordneter Strohleitbleche 56 umfasst, welche unterhalb einer Strohverteilerhaube 58 angeordnet sind.

Die Figur 2 zeigt den Rotor mit dem Rotorkörper 44 und den daran angebrachten Messern 46 in perspektivischer Darstellung. Auf den Rotorkörper 44 sind acht (sich jeweils in Achsrichtung des Rotorkörpers 44 erstreckende) Reihen an Konsolen 60 aufgeschweißt, die mit sich in Achsrichtung des Rotorkörpers 44 erstreckenden Bohrungen 62 versehen sind (s. Figur 3). Durch jede der Bohrungen 62 erstreckt sich jeweils ein Befestigungselement 64 in Form einer Schraube, die durch eine Mutter 66 gesichert ist.

Das Befestigungselement 64 dient bei den Konsolen 60 jeder zweiten Reihe zur Befestigung von Luftschaufelelementen 68 auf beiden Seiten der Konsolen 60, indem es sich durch entsprechende Löcher 70 in den Luftschaufelelementen 68 erstreckt.

Die Luftschaufelelemente 68 weisen einen U-förmigen Querschnitt auf und haben somit drei Schenkel 78, 80, 82. Das Loch 70 befindet sich im mittleren Schenkel 78, so dass die anderen Schenkel 80, 82 sich in Achsrichtung des Rotorkörpers 44 erstrecken. Die Außenkanten der anderen Schenkel 80, 82 sind vom mittleren Schenkel 78 ausgehend zum äußeren Ende hin geringfügig abgeschrägt. Die am Rotorkörper 44 anliegende Fläche des mittleren Schenkels 78 der Luftschaufelelemente 68 ist abgerundet, so dass sich nur ein geringer oder kein Spalt zwischen den Luftschaufelelementen 68 und dem Rotorkörper 44 ergibt. Auf diese Weise erreicht man, dass die Luftschaufelelemente 68 starr - und somit nicht pendelnd - am Rotorkörper 44 befestigt sind. Die Luftschaufelelemente 68 auf beiden Seiten der Konsole 60 sind zur Längsachse des Rotorkörpers 44 symmetrisch und untereinander identisch, so dass nur ein Typ an Luftschaufelelementen 68 herzustellen ist und sie untereinander ausgetauscht werden können.

Die Länge der Luftschaufelelemente 68 ist geringer als die der Messer 46, so dass letztere, aber nicht die Luftschaufelelemente 68 zwischen den Gegenmessem 50 eintauchen können. Die Luftschaufelelemente 68 wirken daher auch nicht mit dem Häckselmaterial zusammen, sondern fördern nur Luft.

Die Befestigung der Luftschaufelelemente 68 erfolgt, wie in der Figur 3 dargestellt, durch Befestigungselemente 64 in Form einer Schraube, die sich jeweils durch ein Loch in einem Luftschaufelelement 68, die Bohrung 62 in der Konsole 60, ein Loch 70 in einem weiteren Luftschaufelelement 68 und schließlich die Mutter 66 erstreckt.

In Umfangsrichtung des Rotors folgt somit jeweils eine Konsole 60, die nur pendelnd daran gelagerte Messer 46 trägt, auf eine (axial etwas versetzte) Konsole 60, die nur starr daran befestigte Luftschaufelelemente 68 trägt und umgekehrt. In axialer Richtung folgen in der Figur 2 entweder Konsolen 60 mit Messern 46 oder Konsolen 60 mit Luftschaufelelementen 68 aufeinander, obwohl sich auch in dieser Richtung Konsolen 60 mit Messern 46 und Konsolen 60 mit Luftschaufelelementen 68 abwechseln könnten.

Die Figur 4 zeigt eine zweite Ausführungsform eines Rotors. Mit der ersten Ausführungsform übereinstimmende Elemente sind mit denselben Bezugszeichen gekennzeichnet. Es liegen zwei wesentliche Unterschiede zur ersten Ausführungsform vor:
a) Die Luftschaufelbleche 168 sind nicht starr, sondern pendelnd am Rotorkörper 44 gelagert (s. Figur 5).
b) Es folgen in Umfangsrichtung des Rotorkörpers 44 jeweils drei Messer 46 tragende Konsolen 60 auf eine Luftschaufelelemente 168 tragende Konsole 60.

In axialer Richtung folgen in der Figur 4 entweder Konsolen 60 mit Messern 46 oder Konsolen 60 mit Luftschaufelelementen 168 aufeinander, obwohl sich auch in dieser Richtung Konsolen 60 mit Messern 46 und Konsolen 60 mit Luftschaufelelementen 168 abwechseln könnten.

Die Befestigung der Luftschaufelelemente 168 erfolgt, wie in der Figur 5 dargestellt, durch Befestigungselemente 64 in Form einer Schraube, die sich jeweils durch eine erste Buchse 72, ein Loch 70 in einem Luftschaufelelement 168, die Bohrung 62 in der Konsole 60, ein Loch 70 in einem weiteren Luftschaufelelement 168, eine weitere erste Buchse 72, und schließlich die Mutter 66 erstreckt. Die Buchsen 72 erstrecken sich jeweils durch das Loch 70 im Luftschaufelelement 168, wobei ein hinreichendes Spiel zur pendelnden Lagerung des Luftschaufelelements 168 verbleibt. Die Buchsen 72 können sich in die Bohrung 62 hinein erstrecken, müssen es aber nicht.

Die Luftschaufelelemente 168 weisen einen U-förmigen Querschnitt auf und haben somit drei Schenkel 78, 80 und 82. Das Loch 70 befindet sich im mittleren Schenkel 78, so dass der zweite Schenkel 80 und der dritte Schenkel 82 sich jeweils in Achsrichtung des Rotorkörpers 44 erstrecken. Der erste Schenkel 78 ist länger als der zweite und dritte Schenkel 80, 82. Ihre in radialer Richtung des Rotorkörpers 44 betrachtet äußeren Enden liegen jedoch in einer Ebene. In Achsrichtung des Rotorkörpers 44 betrachtet entspricht die Länge der zweiten und dritten Schenkel 80, 82 etwa der Hälfte der in Drehrichtung gemessenen Breite der Messer 46. Die Schenkel 80, 82 erstrecken sich demnach nur über einen Teil des Abstands zwischen zwei in einer Reihe benachbarten Konsolen 60, was den Energiebedarf des Strohhäckslers 42 in Grenzen hält. Die Luftschaufelelemente 68, 168 können einteilig aus Metall hergestellt werden, indem sie zunächst ausgestanzt und dann die Schenkel 80, 82 umgebogen werden. Alternativ werden sie aus Kunststoff hergestellt, insbesondere im Spritzgussverfahren.

Der dem Rotorkörper 44 benachbarte Bereich des ersten Schenkels 78 ist konvex abgerundet, so dass sich das Luftschaufelelement 168 in Richtung des Pfeils 84 frei um das Befestigungselement 64 drehen kann. Die dargestellte Position nehmen die Luftschaufelelemente 168 beim Betrieb aufgrund der Fliehkraft ein. Die Luftschaufelelemente 168 auf beiden Seiten der Konsole 60 sind zur Längsachse des Rotorkörpers 44 symmetrisch und untereinander identisch, so dass nur ein Typ an Luftschaufelelementen 168 herzustellen ist und sie untereinander ausgetauscht werden können.

Die Länge der Luftschaufelelemente 168 ist geringer als die der Messer 46, so dass letztere, aber nicht die Luftschaufelelemente 168 zwischen den Gegenmessem 50 eintauchen können.

In beiden Ausführungsformen tragen die Konsolen 60 entweder Messer 46 oder Luftschaufelelemente 68 bzw. 168, aber nicht beide gemeinsam. Bei der Ausführungsform nach Figur 5 erhält man in der Regel eine kleinere Partikelgröße als bei der Ausführungsform nach Figur 3, die in vielen Fällen aber auch hinreichend ist und einen wesentlich kleineren Aufwand verlangt.

## Patentansprüche (Patentansprüche für folgende(n) Vertragsstaat(en): AT)

1. Rotor für einen Strohhäcksler (42), mit einem Rotorkörper (44), einer Mehrzahl um den Umfang und in axialer Richtung um den Rotorkörper (44) verteilten, daran befestigten Konsolen (60), einer Anzahl an Messern (46), die an Konsolen (60) pendelnd gelagert sind, sowie mit einer Anzahl an Luftschaufelelementen (68, 168), die in radialer Richtung kürzer als die Messer (46) und an Konsolen (60) befestigt sind, **dadurch gekennzeichnet, dass** eine Teilanzahl der Konsolen (60) nur wenigstens ein Luftschaufelelement (68, 168), aber kein Messer (46) haltert.

2. Rotor nach Anspruch 1, **dadurch gekennzeichnet, dass** die Messer (46) und die Luftschaufelelemente (68, 168) in der Umfangsrichtung des Rotorkörpers (44) in einer abwechselnden Weise aufeinander folgen.

3. Rotor nach Anspruch 2, **dadurch gekennzeichnet, dass** in Umfangsrichtung des Rotorkörpers (44) jeweils ein Messer (46) auf ein Luftschaufelelement (68) folgt.

4. Rotor nach Anspruch 2, **dadurch gekennzeichnet, dass** in Umfangsrichtung des Rotorkörpers (44) jeweils drei Messer (46) auf ein Luftschaufelelement (168) folgen.

5. Rotor nach einem der Ansprüche 1 bis 4, **dadurch gekennzeichnet, dass** die Luftschaufelelemente (68, 168) starr oder pendelnd an den Konsolen (60) befestigt sind.

6. Rotor nach einem der Ansprüche 1 bis 5, **dadurch gekennzeichnet, dass** die Messer (46) flach sind.

7. Rotor nach einem der vorhergehenden Ansprüche, **dadurch gekennzeichnet, dass** die Luftschaufelelemente (68, 168) einen U-förmigen Querschnitt aufweisen und mit ihrem mittleren Schenkel (78) an der Konsole (60) befestigt sind.

8. Strohhäcksler (42) mit einem Rotor nach einem der vorhergehenden Ansprüche.

9. Strohhäcksler (42) nach Anspruch 8, **dadurch gekennzeichnet, dass** der Rotor in einem mit Gegenmessern (50) ausgestatteten Gehäuse (48) angeordnet ist, und dass die Luftschaufelelemente (68, 168) derart kurz sind, dass sie nicht zwischen die Gegenmesser (50) eintauchen.

10. Mähdrescher (10) mit einem Strohhäcksler (42) nach Anspruch 8 oder 9.

## Patentansprüche (Patentansprüche für folgende(n) Vertragsstaat(en): BE, DE, SE)

1. Rotor für einen Strohhäcksler (42), mit einem Rotorkörper (44), einer Mehrzahl um den Umfang und in axialer Richtung um den Rotorkörper (44) verteilten, daran befestigten Konsolen (60), einer Anzahl an Messern (46), die an Konsolen (60) pendelnd gelagert sind, sowie mit einer Anzahl an Luftschaufelelementen (68, 168), die einen U-förmigen Querschnitt aufweisen und mit ihrem mittleren Schenkel (78) an Konsolen (60) befestigt und in radialer Richtung kürzer als die Messer (46) sind, **dadurch gekennzeichnet, dass** eine Teilanzahl der Konsolen (60) nur wenigstens ein Luftschaufelelement (68, 168), aber kein Messer (46) haltert.

2. Rotor nach Anspruch 1, **dadurch gekennzeichnet, dass** die Messer (46) und die Luftschaufelelemente (68, 168) in der Umfangsrichtung des Rotorkörpers (44) in einer abwechselnden Weise aufeinanderfolgen.

3. Rotor nach Anspruch 2, **dadurch gekennzeichnet, dass** in Umfangsrichtung des Rotorkörpers (44) jeweils ein Messer (46) auf ein Luftschaufelelement (68) folgt.

4. Rotor nach Anspruch 2, **dadurch gekennzeichnet, dass** in Umfangsrichtung des Rotorkörpers (44) jeweils drei Messer (46) auf ein Luftschaufelelement (168) folgen.

5. Rotor nach einem der Ansprüche 1 bis 4, **dadurch gekennzeichnet, dass** die Luftschaufelelemente (68, 168) starr oder pendelnd an den Konsolen (60) befestigt sind.

6. Rotor nach einem der Ansprüche 1 bis 5, **dadurch gekennzeichnet, dass** die Messer (46) flach sind.

7. Strohhäcksler (42) mit einem Rotor nach einem der vorhergehenden Ansprüche.

8. Strohhäcksler (42) nach Anspruch 7, **dadurch gekennzeichnet, dass** der Rotor in einem mit Gegenmessem (50) ausgestatteten Gehäuse (48) angeordnet ist, und dass die Luftschaufelelemente (68, 168) derart kurz sind, dass sie nicht zwischen die Gegenmesser (50) eintauchen.

9. Mähdrescher (10) mit einem Strohhäcksler (42) nach Anspruch 7 oder 8.

## Claims (Claims for the following Contracting State(s): AT)

1. Rotor for a straw chopper (42), having a rotor body (44), a plurality of brackets (60) which are distributed around the circumference and in the axial direction around the rotor body (44) and are attached thereto, a number of blades (46) which are mounted in an oscillating fashion on brackets (60), and having a number of air vane bodies (68, 168) which are shorter than the blades (46) in the radial direction and are attached to brackets (60), **characterized in that** some of the brackets (60) are fitted with just at least one air vane body (68, 168) but no blade (46).

2. Rotor according to Claim 1, **characterized in that** the blades (46) and the air vane bodies (68, 168) follow one another in an alternating fashion in the circumferential direction of the rotor body (44).

3. Rotor according to Claim 2, **characterized in that** in each case a blade (46) follows an air vane body (68) in the circumferential direction of the rotor body (44).

4. Rotor according to Claim 2, **characterized in that** in each case three blades (46) follow an air vane body (168) in the circumferential direction of the rotor body (44).

5. Rotor according to one of Claims 1 to 4, **characterized in that** the air vane bodies (68, 168) are attached in a rigid fashion or in an oscillating fashion to the brackets (60).

6. Rotor according to one of Claims 1 to 5, **characterized in that** the blades (46) are flat.

7. Rotor according to one of the preceding claims, **characterized in that** the air vane bodies (68, 168) have a U-shaped cross section and are attached by their central limb (78) to the bracket (60).

8. Straw chopper (42) having a rotor according to one of the preceding claims.

9. Straw chopper (42) according to Claim 8, **characterized in that** the rotor is arranged in a housing (48) which is equipped with opposing blades (50), and **in that** the air vane bodies (68, 168) are so short that they do not dip in between the opposing blades (50).

10. Combine harvester (10) having a straw chopper (42) according to Claim 8 or 9.

## Claims (Claims for the following Contracting State(s): BE, DE, SE)

1. Rotor for a straw chopper (42), having a rotor body (44), a plurality of brackets (60) which are distributed around the circumference and in the axial direction around the rotor body (44) and are attached thereto, a number of blades (46) which are mounted in an oscillating fashion on brackets (60), and having a number of air vane bodies (68, 168) which have a U-shaped cross section, are attached by their central limb (78) to brackets (60) and are shorter than the blades (46) in the radial direction, **characterized in that** some of the brackets (60) are fitted with just at least one air vane body (68, 168) but no blade (46).

2. Rotor according to Claim 1, **characterized in that** the blades (46) and the air vane bodies (68, 168) follow one another in an alternating fashion in the circumferential direction of the rotor body (44).

3. Rotor according to Claim 2, **characterized in that** in each case a blade (46) follows an air vane body (68) in the circumferential direction of the rotor body (44).

4. Rotor according to Claim 2, **characterized in that** in each case three blades (46) follow an air vane body (168) in the circumferential direction of the rotor body (44).

5. Rotor according to one of Claims 1 to 4, **characterized in that** the air vane bodies (68, 168) are attached in a rigid fashion or in an oscillating fashion to the brackets (60).

6. Rotor according to one of Claims 1 to 5, **characterized in that** the blades (46) are flat.

7. Straw chopper (42) having a rotor according to one of the preceding claims.

8. Straw chopper (42) according to Claim 7, **characterized in that** the rotor is arranged in a housing (48) which is equipped with opposing blades (50), and **in that** the air vane bodies (68, 168) are so short that they do not dip in between the opposing blades (50).

9. Combine harvester (10) having a straw chopper (42) according to Claim 7 or 8.

## Revendications (Revendications pour l'(les) Etat(s) contractant(s) suivant(s): AT)

1. Rotor pour un hache-paille (42), comprenant un corps de rotor (44), une pluralité de consoles (60) réparties sur la périphérie et en direction axiale autour du corps de rotor (44), fixées à celui-ci, une pluralité de couteaux (46) qui sont montés de manière oscillante sur les consoles (60), ainsi qu'une pluralité d'éléments formant pelles d'air (68, 168), qui sont plus courts que les couteaux (46) dans la direction radiale et qui sont fixés aux consoles (60), **caractérisé en ce qu'**un nombre partiel des consoles (60) retient seulement au moins un élément formant pelle d'air (68, 168), mais pas de couteaux (46).

2. Rotor selon la revendication 1, **caractérisé en ce que** les couteaux (46) et les éléments formant pelles d'air (68, 168) se suivent en alternance dans la direction périphérique du corps de rotor (44).

3. Rotor selon la revendication 2, **caractérisé en ce que**, dans la direction périphérique du corps de rotor (44), un couteau (46) suit à chaque fois un élément formant pelle d'air (68).

4. Rotor selon la revendication 2, **caractérisé en ce que**, dans la direction périphérique du corps de rotor (44), à chaque fois trois couteaux (46) suivent un élément formant pelle d'air (168).

5. Rotor selon l'une quelconque des revendications 1 à 4, **caractérisé en ce que** les éléments formant pelles d'air (68, 168) sont fixés de manière rigide ou oscillante aux consoles (60).

6. Rotor selon l'une quelconque des revendications 1 à 5, **caractérisé en ce que** les couteaux (46) sont plats.

7. Rotor selon l'une quelconque des revendications précédentes, **caractérisé en ce que** les éléments formant pelles d'air (68, 168) présentent une section transversale en forme de U et sont fixés à la console (60) avec leur branche centrale (78).

8. Hache-paille (42) comprenant un rotor selon l'une quelconque des revendications précédentes.

9. Hache-paille (42) selon la revendication 8, **caractérisé en ce que** le rotor est disposé dans un carter (48) configuré avec des contre-couteaux (50), et **en ce que** les éléments formant pelles d'air (68, 168) sont suffisamment courts pour ne pas plonger entre les contre-couteaux (50).

10. Moissonneuse-batteuse (10) comprenant un hache-paille (42) selon la revendication 8 ou 9.

## Revendications (Revendications pour l'(les) Etat(s) contractant(s) suivant(s): BE, DE, SE)

1. Rotor pour un hache-paille (42), comprenant un corps de rotor (44), une pluralité de consoles (60) réparties sur la périphérie et en direction axiale autour du corps de rotor (44), fixées à celui-ci, une pluralité de couteaux (46) qui sont montés de manière oscillante sur les consoles (60), ainsi qu'une pluralité d'éléments formant pelles d'air (68, 168), qui présentent une section transversale en forme de U, qui sont fixés à des consoles (60) par leur branche centrale (78) et qui sont plus courts que les couteaux (46) dans la direction radiale, **caractérisé en ce qu'**un nombre partiel des consoles (60) retient seulement au moins un élément formant pelle d'air (68, 168), mais pas de couteaux (46).

2. Rotor selon la revendication 1, **caractérisé en ce que** les couteaux (46) et les éléments formant pelles d'air (68, 168) se suivent en alternance dans la direction périphérique du corps de rotor (44).

3. Rotor selon la revendication 2, **caractérisé en ce que**, dans la direction périphérique du corps de rotor (44), un couteau (46) suit à chaque fois un élément formant pelle d'air (68).

4. Rotor selon la revendication 2, **caractérisé en ce que**, dans la direction périphérique du corps de rotor (44), à chaque fois trois couteaux (46) suivent un élément formant pelle d'air (168).

5. Rotor selon l'une quelconque des revendications 1 à 4, **caractérisé en ce que** les éléments formant pelles d'air (68, 168) sont fixés de manière rigide ou oscillante aux consoles (60).

6. Rotor selon l'une quelconque des revendications 1 à 5, **caractérisé en ce que** les couteaux (46) sont plats.

7. Hache-paille (42) comprenant un rotor selon l'une quelconque des revendications précédentes.

8. Hache-paille (42) selon la revendication 7, **caractérisé en ce que** le rotor est disposé dans un carter (48) configuré avec des contre-couteaux (50), et **en ce que** les éléments formant pelles d'air (68, 168) sont suffisamment courts pour ne pas plonger entre les contre-couteaux (50).

9. Moissonneuse-batteuse (10) comprenant un hache-paille (42) selon la revendication 7 ou 8.
